# EUROPEAN PATENT SPECIFICATION

(11) **EP 0 548 653 B1**
(45) Date of publication and mention of the grant of the patent: **01.05.1996**
(21) Application number: 92120850.0
(22) Date of filing: 07.12.1992
(51) Int. Cl.: B60R 22/18

(54) **Anchorage device for safety belt buckles**
Verankerung für Sicherheitsgurtschnallen
Ancrage pour boucles de ceintures de sécurité

(30) Priority: 23.12.1991 IT MI913458
(43) Date of publication of application: 30.06.1993
(73) Proprietor: TRW SABELT S.p.A., I-10024 Moncalieri (TO) (IT)
(72) Inventor: Lacconi, Sergio, I-10100 Torino (IT)
(74) Representative: Petruzziello, Aldo

(56) References cited:
- FR-A- 2 411 102
- FR-A- 2 540 017
- FR-A- 2 573 017
- GB-A- 2 244 638
- US-A- 4 260 178
- US-A- 4 915 451
- US-A- 4 966 393

## Description

The present invention refers to an articulated anchoring device for safety belt buckles, particularly for motor vehicles.

As is known, a safety belt comprises an attachment device, consisting of a buckle and of a tongue which is inserted into and locks in the buckle.

The buckle is anchored to the frame of the vehicle, or conveniently to the frame of the seat, especially in the case of front seats.

In certain cases, the regulations stage that such anchorage must not be of a rigid type, but of a flexible type, that is in such a way that the buckle is able to oscillate in two directions which are at right angles to each other, and specifically in the direction of the forward movement of the vehicle and in the direction transverse to it.

In order to obtain such a flexible anchorage, different systems have been proposed, all of which, however, involve drawbacks.

One system consists of connecting the body of the buckle to the anchorage stirrup with a fabric ribbon, after positioning a flexible metal sheet inside, and covering the whole with plastic with suitable ribs.

This system has shown to be too laborious and expensive.

Another system consists in molding at the end of a metallic anchorage stirrup an appropriately shaped part made of plastic, which has stops with spring backs for the forward and backward oscillation of the buckle, and springs to confer a certain transverse flexibility to the same.

This system also has proved to be exceedingly complicated and expensive.

Yet another system consists in the use of a metallic braid, to the ends of which are folded respective caps, which are fastened respectively, in their turn, to the seat frame and to the buckle.

This solution involves resistance problems.

FR-A-2 540 054 discloses an anchorage device for buckles for safety belts, having a complex joint which in practice allows rotational movements around an axle and only negligible movements in the other directions.

The aim of the invention is to eliminate the drawbacks found with the anchorage systems already known, by providing a simple, economical device, which will allow the buckle to move in all directions in the space, and which may be installed, without substantial modifications, both at the anchorage point of the supporting stirrup of the buckle and at an intermediate point of such stirrup.

The positioning of the flexible anchorage device in correspondence with the anchorage point of the stirrup to the seat frame usually proves to be more suitable, but this is not possible in some cases because of the outer bulk of some accessories pre-positioned on the seat, for example a seat- raising mechanism. In such cases, therefore, it is necessary to position the flexible articulated joint in an intermediate point of the anchorage stirrup, above the said accessories.

The traditional flexible anchorage systems do not usually afford such versatility of installation.

The anchorage device according to the invention is substantially made up of a spherical articulated joint, which can be positioned, without making any difference, in correspondence with one of the two ends of the anchorage stirrup of the buckle, either the one fastening it to the seat frame or the one connecting it to the buckle.

The spherical articulated joint according to the invention is obtained by making a hole in the anchorage stirrup, in which an anchor pin is positioned and by placing a spherical body between the pin and the hole.

In some embodiments of the invention, such spherical body is made integral with the anchorage stirrup and is free to move on the anchor pin, in order to allow the movements of the buckle.

Conveniently such spherical body is made in two parts which couple together, closing on the stirrup.

In one embodiment, the spherical body is housed between opposed side plates having an inner spherical outline.

According to a variation, such opposed plates have a flat outline, and between them and the spherical body elastic elements are foreseen which allow the automatic return of the buckle in the rest position. According to another variation, such elastic mean are made integrally with the spherical body.

According to another embodiment, the said spherical body is made integral to the anchor pin, while the stirrup carrying the buckle can oscillate on such pin, in contrast to elastic means.

Further characteristics of the invention will be made clearer by the detailed description given below, which refers to one of its purely exemplary and therefore not restrictive embodiments, illustrated in the appended drawings, wherein:
figures 1a and 1b illustrate in diagrammatic form two possible positons of the anchor device according to the invention, respectively in correspondence with the fastening point of the buckle-holder stirrup to the seat frame, and in a point of such stirrup nearer to the buckle;
figure 2a illustrates in diagrammatic form a transverse section of a first embodiment of the spherical articulated joint, positioned in correspondence with the anchor point of the buckle-holder stirrup;
figure 2b illustrates the same spherical articulated joint, transferred to the other end of the buckle-holder stirrup;
This first embodiment shown in figures 2a and 2b does not fall within the scope of the main claim.
figures 3a and 3b illustrate another realization of the spherical articulated joint according to the invention, positioned respectively in correspondence with the anchorage end of the buckle-holder stirrup and the opposite end, and correspond respectively to figures 2a and 2b;
figures 4a and 4b illustrate a third embodiment of the spherical articulated joint according to the invention, located respectively in the positions corresponding to those in figure 2a and 2b;
figures 5 and 5b illustrate a fourth embodiment of the spherical articulated joint according to the invention, located respectively in the positions corresponding to those in figures 1a and 1b;
figures 6a and 6b illustrate a fifth embodiment of the spherical articulated joint according to the invention, located respectively in the positions corresponding to those on figures 1a and 1b;
figure 7 is a perspective view of an elastic element of the embodiment shown in figures 6a and 6b.

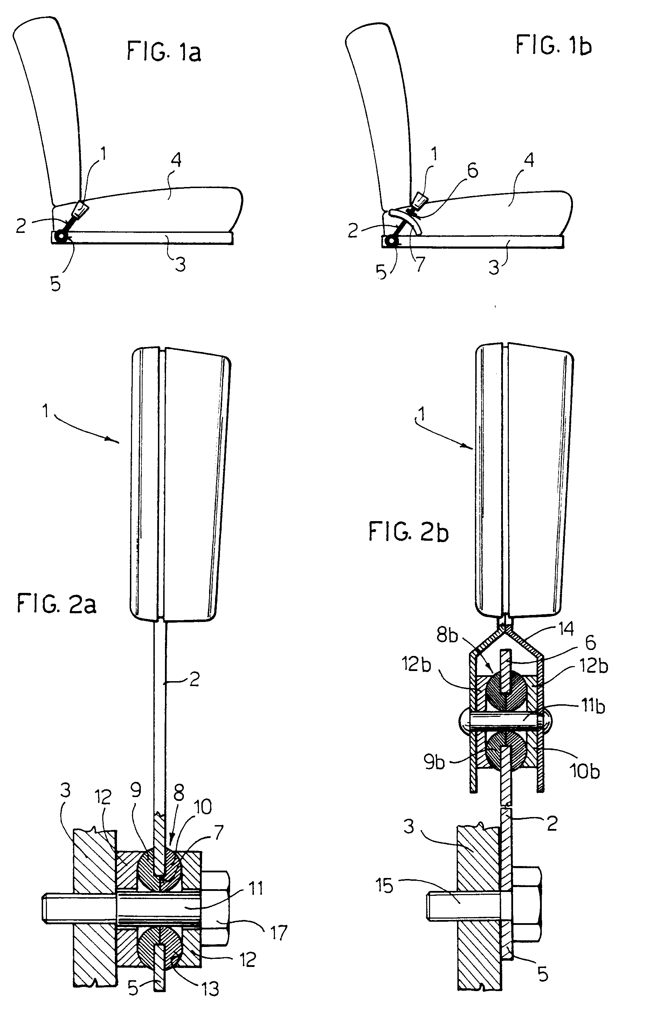

In figures 1a and 1b a diagrammatic illustration is given of a safety belt buckle 1, fastened, by means of a special support stirrup 2, to the frame 3 of a seat 4.

In figure 1a, the "floating" anchorage device according to the invention, is positioned in correspondence with the anchorage point or end 5 of the stirrup 2 to the frame 3, while in figure 1b it is shifted in correspondence with the other end 6 of the stirrup 2, that is in a position which is nearer to the buckle 1, so as not to obstruct, for example, the mechanism for raising the seat 4, illustrated in diagrammatic form and shown with reference number 7.

With reference now to figure 2a, an illustration is given of a first embodiment of the floating anchorage device, mounted in the position shown in figure 1a.

Substantially the device consists of a spherical articulated joint, realized by making a hole 7 near the anchorage end 5 of the stirrup 2, in which a spherical body 8 is blocked, conveniently made up of two halves 9 and 10, which when coupled determine a ring element with a substantially circular outline, or a sort of hoop which surrounds the hole 7, and into which a pin 11 is inserted for fastening to the frame 3. On the two sides of the spherical body 10 respective plates or washers 12 are positioned with a "spherical" inner outline which follows the curve of the element 8, so as to allow its free rotation, which takes place with some friction depending on the clamping force acting on the anchor pin 11.

As can be clearly seen in figure 2a, the type of constraint thus obtained is such as will allow, within certain limits, a movement of the buckle 1 in all directions of the space.

In figure 2b the same spherical articulated joint is shown, mounted in the position illustrated in figure 1b, that is in correspondence with the free end 6 of the stirrup 2. In such case, a forked element 14 comes out from the buckle 1, which surrounds the two opposed plates, referenced with number 12b. The whole is locked by the pin 11b, for example riveted on both sides.

In figure 2b the elements which correspond to those illustrated in figure 2a are shown with the same reference numbers followed by the letter b. Number 15 shows the anchorage element of the stirrup 2 to the frame 3.

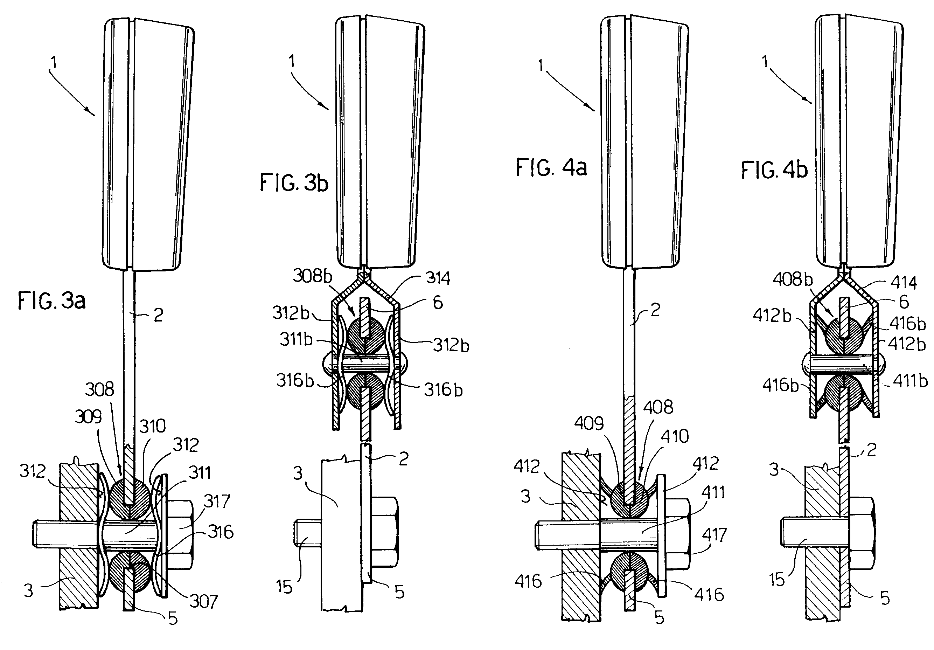

A description is now given of the embodiment illustrated in figure 3a, using the same reference numbers increased by 300 in the illustration of the articulated joint to indicate the same elements illustrated in figure 2a.

The embodiment in figure 3a differs from the one in figure 2a in that the two opposed plates 312 foreseen at the two sides of the spherical body 308, have a flat inner surface, and between them and the spherical body elastic elements 316 are positioned, consisting for example of corrugated washers, which allow the return of the buckle 1 in its rest position , when it is released.

The flat plates 312 can, in this case, consist of the inner face of the head 317 of the pin 311 and of the outer face of the frame 3 respectively.

In figure 3b, the same spherical articulated joint is illustrated as in figure 3a, mounted in the position corresponding to figure 1b. In such figure 3b, the same reference numbers, followed by the letter b, have been employed for indicating elements which are the same or corresponding.

As can be seen, in such case, the two opposed plates 312b which surround the corrugated elastic washers 316b consist of the two arms of the forked element 314.

In figure 4a a third embodiment of the spherical articulated joint according to the invention is illustrated, which differs from the embodiment in figure 3a only in that the elastic elements 416 consist of flexible tabs made integrally with the respective halves 409 and 410 of the spherical body 408.

Figure 4b illustrates the transposition of the spherical articulated joint in figure 4a in the top part of the stirrup 2 (position in figure 1b).

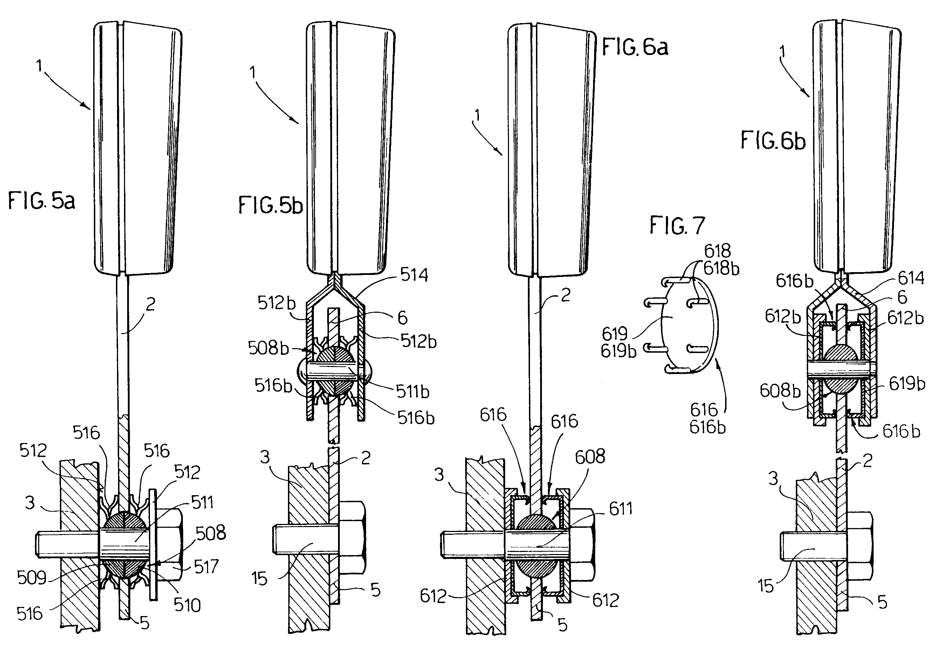

In figure 5a a fourth embodiment of the spherical articulated joint according to the invention is illustrated.

According to such embodiment, the spherical body 508 is again suitably made in two halves 509 and 510 and is locked on the pin 511, while the stirrup 2 is free to oscillate on the spherical body 508.

On the two halves 509 and 510 of the spherical body 508 , flexible tabs 516 are foreseen which move to act both against the stirrup 2 and against the inner flat surfaces of the opposed plates 512. This embodiment of the spherical articulated joint also ensures the spring back of the buckle 1 in the rest position.

Figure 5b shows the assembly of the spherical articulated joint in figure 5a in the position corresponding to the one in figure 1b.

In figure 6a a fifth embodiment of the invention is illustrated, which differs from the one illustrated in figure 5a in that the elastic elements 616 act between the stirrup 2 and the opposed plates 612, which, in this case, are suitably cup-shaped. The elastic elements 616 can, for example, consist of "tabs" 618 carried by a flat plate 619 housed in a corresponding cup 612 (fig. 7).

According to this embodiment, the spherical element 608 is conveniently made enbloc, instead of in two separate pieces.

In figure 6b the spherical articulated joint in figure 6a is illustrated mounted in the position corresponding to the one illustrated in figure 1b.

It is evident that the frame 4, the stirrup 2, the fork 14 and the pins 11 and 15 are made of metallic material, while the remaining elements can conveniently be made of plastic material also.

Of course, the invention is not limited to the embodiments previously described and illustrated in the appended drawings, but modifications can be made to its details which are within the scope of the appended claims.

## Claims

1. An anchorage device for buckles (1) for safety belts, fastened to a frame (3), for example of a seat (4), by means of a support stirrup (2), having a joint which allows rotational movements of the buckle in any direction, characterized in that said joint is a spherical articulated joint.

2. A device according to claim 1, characterized in that the said spherical articulated joint is positioned in correspondence with the end (5) of the stirrup (2) anchored to the frame (3).

3. A device according to claim 1, characterized in that the said spherical articulated joint is positioned in correspondence with the free and (6) of the stirrup (2), between the latter and a forked element (14) fastened to the buckle (1).

4. A device according to any one of the previous claims, characterized in that the said articulated joint comprises a spherical body (8, 8b, 308, 308b, 408, 408b, 508, 508b, 608, 608b) interposed between a hole (7) made in the stirrup (2) and a pin (11, 11b, 311, 311b, 411, 411b, 511, 511b, 611, 611b), inserted into the said hole (7) and fastening the stirrup (2) to the said frame (3) or to the said forked element (14).

5. A device according to claim 4, characterized in that the said spherical body (8, 8b, 308, 308b, 408, 408b) is made integral to the stirrup (2) and is interposed between a pair of side plates (12, 12b, 312, 312b, 412, 412b).

6. A device according to claim 5, characterized in that the said spherical body (8, 8b, 308, 308b, 408, 408b) consists of two halves (9, 10, 9b, 10b, 309, 310, 309b, 310b, 409, 410, 409b, 410b), which close on the stirrup (2) in correspondence with the said hole (7).

7. A device according to claim 5 or 6, characterized in that the said opposed plates (12, 12b) have inner surfaces with a curve corresponding to that of the spherical body (8), with which they are in contact, the said opposed plates (12, 12b) being interposed respectively between the head of the pin (11) and the frame (3), and between the two arms of the fork (14).

8. A device according to claim 5 or 6, characterized in that between the said side plates (312, 312b, 412, 412b) and the said spherical body (308, 308b, 408, 408b) respective elastic elements (316, 316b, 416, 416b) are interposed.

9. A device according to claim 8, characterized in that the said elastic elements (316, 316b) consist of corrugated washers.

10. A device according to claim 8, characterized in that the said elastic elements (416, 416b) consist of flexible tabs which are integral with the spherical body (408, 408b).

11. A device according to any one of the claims from 8 to 10, in which the said opposed plates (312, 412) consist of the flat inner faces of the head (317, 417) of the pin (311, 411) and of the frame (3).

12. A device according to any one of the claims from 8 to 10, in which the said opposed plates (312b, 412b) consist of the arms of the forked element (314, 414).

13. A device according to any one of the claims from 1 to 4, characterized in that the said spherical body (508, 508b, 608, 608b) is integral with the corresponding pin (511, 511b, 611, 611b) and is positioned between opposed plates (512, 512b, 612, 612b) with the interposition beforehand of elastic means ( 516, 516b, 616, 616b).

14. A device according to claim 13, characterized in that the said spherical body (508, 508b) is made in two parts, and the said elastic elements (516, 516b) consist of tabs integral with the said spherical body and acting between the stirrup (2) and the said opposed plates (512, 512b).

15. A device according to claim 14, characterized in that the said opposed plates (512) are integral with the pin (511) and the frame (3) respectively.

16. A device according to claim 14, characterized in that the said opposed plates (512b) consist of arms of the fork (514).

17. A device according to claim 13, characterized in that the said spherical body (608, 608b) is made enbloc.

18. A device according to claim 13 or 17, characterized in that the said elastic elements (616, 616b) act between the stirrup (2) and the said opposed plates (612, 612b).

19. A device according to claim 18, characterized in that the said elastic elements (616, 616b) consist of flexible "tabs" (618, 618b), which are carried in a washer (619, 619b) housed in a respective cup-shaped plate (612, 612b).

## Patentansprüche

1. Eine Vorrichtung zur Verankerung von Schnallen (1) für Sicherheitsgurte, befestigt an einem Rahmen (3), zum Beispiel einem Sitz (4) mittels einem Tragebügel (2), mit einem Gelenk, das Drehbewegungen der Schnalle in sämtliche Richtungen ermöglicht, dadurch gekennzeichnet, daß jenes Gelenk ein Kugelgelenk ist.

2. Eine Vorrichtung gemäß dem Anspruch 1, dadurch gekennzeichnet, daß jenes Kugelgelenk sich entsprechend dem Ende (5) des am Rahmen (3) verankerten Bügels (2) befindet.

3. Eine Vorrichtung gemäß dem Anspruch 1, dadurch gekennzeichnet, daß jenes Kugelgelenk sich entsprechend dem freien Ende (6) des Bügels (2) befindet, zwischen diesem und einem gabelförmigen Element (14), das mit der Schnalle (1) verbunden ist.

4. Eine Vorrichtung gemäß einem beliebigen der vorhergehenden Ansprüche, dadurch gekennzeichnet, daß jenes Kugelgelenk einen sphärischen Körper (8, 8b, 308, 308b, 408, 408b, 508, 508b, 608, 608b) zwischen einem Loch (7) im Bügel (2) und einem Zapfen (11, 11b, 311, 311b, 411, 411b, 511, 511b, 611, 611b) umfaßt, der sich in gesagtem Loch (7) befindet und den Bügel (2) an gesagten Rahmen (3) oder an gesagtes Gabelelement (14) fixiert.

5. Eine Vorrichtung gemäß dem Anspruch 4, dadurch gekennzeichnet, daß jener sphärische Körper (8, 8b, 308, 308b, 408, 408b) mit dem Bügel (2) verbunden ist und sich zwischen einem Paar Seitenplatten (12, 12b, 312, 312b, 412, 412b) befindet.

6. Eine Vorrichtung gemäß dem Anspruch 5, dadurch gekennzeichnet, daR jener sphärische Körper (8, 8b, 308, 308b, 408, 408b) aus zwei Hälften (9, 10, 9b, 10b, 309, 310, 309b, 310b, 409, 410, 409b, 410b) besteht, die sich auf dem Bügel (2) in Entsprechung zu gesagtem Loch (7) schließen.

7. Eine Vorrichtung gemäß dem Anspruch 5 oder 6, dadurch gekennzeichnet, daß jene entgegengesetzten Platten (12, 12b) Innenflächen mit einer Wölbung besitzen, die der des sphärischen Körpers (8) entspricht, mit dem sie sich in Kontakt befinden, da diese gesagten entgegengesetzten Platten (12, 12b) sich jeweils zwischen dem Zapfenkopf (11) und Rahmen (3), sowie den beiden Gabelarmen (14) befinden.

8. Eine Vorrichtung gemäß dem Anspruch 5 oder 6, dadurch gekennzeichnet, daß zwischen jenen Seitenplatten (312, 312b, 412, 412b) und gesagtem sphärischen Körper (308, 308b, 408, 408b) jeweils elastische Elemente sind (316, 316b, 416, 416b).

9. Eine Vorrichtung gemäß dem Anspruch 8, dadurch gekennzeichnet, daß jene elastischen Elemente (316, 316b) aus gewellten Beilagscheiben bestehen.

10. Eine Vorrichtung gemäß dem Anspruch 8, dadurch gekennzeichnet, daß jene elastischen Elemente (416, 416b) aus flexiblen Flügeln am sphärischen Körper (408, 408b) bestehen.

11. Eine Vorrichtung gemäß einem beliebigen der Ansprüche von 8 bis 10, bei dem gesagte entgegengesetzten Platten (312, 412) aus den flachen Innenseiten des Kopfs (317, 417) des Zapfens (311, 411) und des Rahmens (3) bestehen.

12. Eine Vorrichtung gemäß einem beliebigen der Ansprüche von 8 bis 10, bei dem gesagte entgegengesetzten Platten (312b, 412b) aus den Armen des Gabelelements (314, 414) bestehen.

13. Eine Vorrichtung gemäß einem beliebigen der Ansprüche von 1 bis 4, dadurch gekennzeichnet, daß jener sphärische Körper (508, 508b, 608, 608b) mit dem entsprechenden Zapfen (511, 511b, 611, 611b) verbunden ist und sich zwischen den entgegengesetzten Platten (512, 512b, 612, 612b) befindet, mit Dazwischenlagerung von elastischen Elementen (516, 516b, 616, 616b).

14. Eine Vorrichtung gemäß dem Anspruch 13, dadurch gekennzeichnet, daß jener sphärische Körper (508, 508b) aus zwei Teilen besteht und die gesagten elastischen Elemente (516, 516b) aus Integralflügeln gesagten sphärischen Körpers bestehen und zwischen dem Bügel (2) und gesagten entgegengesetzten Platten (512, 512b) wirken.

15. Eine Vorrichtung gemäß dem Anspruch 14, dadurch gekennzeichnet, daß jene entgegengesetzten Platten (512) jeweils mit dem Zapfen (511) und dem Rahmen (3) verbunden sind.

16. Eine Vorrichtung gemäß dem Anspruch 14, dadurch gekennzeichnet, daß jene entgegengesetzten Platten (512b) aus den Gabelarmen (514) bestehen.

17. Eine Vorrichtung gemäß dem Anspruch 13, dadurch gekennzeichnet, daß jener sphärische Körper (608, 608b) aus einem einzigen Teil gewonnen wurde.

18. Eine Vorrichtung gemäß dem Anspruch 13 oder 17, dadurch gekennzeichnet, daß jene elastischen Elemente (616, 616b) zwischen dem Bügel (2) und gesagten entgegengesetzten Platten (612, 612b) wirken.

19. Eine Vorrichtung gemäß dem Anspruch 18, dadurch gekennzeichnet, daß jene elastischen Elemente (616, 616b) aus flexiblen Stielen (618, 618b) bestehen, gestützt von einer Beilagscheibe (619, 619b), die in einer entsprechenden schüsselförmigen Platte (612, 612b) untergebracht ist.

## Revendications

1. Dispositif d'ancrage pour boucles (1) pour ceintures de sécurité, fixées à un châssis (3), par exemple d' un siège (4), par un étrier de support (2) ayant un joint qui permet des mouvements de rotation de la boucle dans toutes les directions, caractérisé par le fait que ledit joint est un joint articulé à rotule.

2. Dispositif selon la revendication 1, caractérisé par le fait que ledit joint à rotule est disposé au niveau de l'extrémité (5) de l'étrier (2) ancrée au châssis (3).

3. Dispositif selon la revendication 1, caractérisé par le fait que ledit joint à rotule est disposé au niveau de l'extrémité libre (6) de l'étrier (2), entre celui-ci et un élément en fourchette (14) fixé à la boucle (1).

4. Dispositif selon une revendication quelconque des précédentes, caractérisé par le fait que ledit joint à rotule comprend un corps sphérique (8, 8b, 308, 308b, 408, 408b, 508, 508b, 608, 608b) interposé entre un trou (7) pratiqué dans l'étrier (2) et un pivot (11, 11b, 311, 311b, 411, 411b, 511, 511b, 611, 611b), introduit dans ce trou (7) et fixant l'étrier (2) au châssis (3) ou à l'élément en fourchette (14).

5. Dispositif selon la revendication 4, caractérisé par le fait que ledit corps sphérique (8, 8b, 308, 308b, 408, 408b) est rendu solidaire de l'étrier (2) et interposé entre une paire de plaques latérales (12, 12b, 312, 312b, 412, 412b).

6. Dispositif selon la revendication 5, caractérisé par le fait que ledit corps sphérique (8, 8b, 308, 308b, 408, 408b) est constitué par deux moitiés (9, 10, 9b, 10b, 309, 310, 309b, 310b, 409, 410, 409b, 410b) qui se ferment sur l'étrier (2) au niveau dudit trou (7).

7. Dispositif selon la revendication 5 ou 6, caractérisé par le fait que lesdites plaques opposées (12, 12b) ont des surfaces internes dont la courbure correspond à celle du corps sphérique (8), avec lequel elles sont en contact, ces plaques opposées (12, 12b) étant interposées respectivement entre la tête du pivot (11) et le châssis (3), et entre les deux bras de la fourchette (14).

8. Dispositif selon la revendication 5 ou 6, caractérisé par le fait qu'entre lesdites plaques latérales (312, 312b, 412, 412b) et ledit corps sphérique (308, 308b, 408, 408b) sont interposés des éléments élastiques respectifs (316, 316b, 416, 416b).

9. Dispositif selon la revendication 8, caractérisé par le fait que lesdits éléments élastiques (316, 316b) sont constitués par des rondelles ondulées.

10. Dispositif selon la revendication 8, caractérisé par le fait que les éléments élastiques (416, 416b) sont constitués par des ailettes flexibles solidaires du corps sphérique (408, 408b).

11. Dispositif selon une revendication quelconque des revendications de 8 à 10, dans lequel lesdites plaques opposées (312, 412) sont constituées par les faces internes plates de la tête (317, 417) du pivot (311, 411) et du châssis (3).

12. Dispositif selon une revendication quelconque des revendications de 8 à 10, dans lequel les plaques opposées (312b, 412b) sont constituées par les bras de l'élément en fourchette (314, 414).

13. Dispositif selon une revendication quelconque des revendications de 1 à 4, caractérisé par le fait que ledit corps sphérique (508, 508b, 608, 608b) est solidaire du pivot correspondant (511, 511b, 611, 611b) et disposé entre des plaques opposées (512, 512b, 612, 612b) après interposition d'éléments élastiques (516, 516b, 616, 616b).

14. Dispositif selon la revendication 13, caractérisé par le fait que ledit corps sphérique (508, 508b) est réalisé en deux parties et les éléments élastiques (516, 516b) sont constitués par des ailettes intégrales avec le corps sphérique et agissant entre l'étrier (2) et les plaques opposées (512, 512b).

15. Dispositif selon la revendication 14, caractérisé par le fait que lesdites plaques opposées (512) sont solidaires respectivement du pivot (511) et du châssis (3).

16. Dispositif selon la revendication 14, caractérisé par le fait que lesdites plaques opposées (512b) sont constituées par les bras de la fourchette (514).

17. Dispositif selon la revendication 13, caractérisé par le fait que ledit corps sphérique (608, 608b) est réalisé en une seule pièce.

18. Dispositif selon la revendication 13 ou 17, caractérisé par le fait que lesdits éléments élastiques (616, 616b) agissent entre l'étrier (2) et lesdites plaques opposées (612, 612b).

19. Dispositif selon la revendication 18, caractérisé par le fait que lesdits éléments élastiques (616, 616b) sont constitués par des "pédoncules" flexibles (618, 618b) portés par une rondelle (619, 619b) logée dans une plaque respective (612, 612b) en forme de cuvette.
